# EUROPEAN PATENT APPLICATION

(11) **EP 4 773 314 A1**
(43) Date of publication of application: **08.07.2026**
(21) Application number: 25814539.0
(22) Date of filing: 27.04.2025
(51) Int. Cl.: H01M 10/058

(54) **SECONDARY BATTERY AND ELECTRONIC DEVICE**

(30) Priority: 28.05.2024 CN 202410674438
(71) Applicant: Ningde Amperex Technology Limited, Ningde, Fujian 352100 (CN)
(72) Inventor: SHEN, Yang, Ningde, Fujian, 352100 (CN)
(74) Representative: Icosa
(86) International application number: PCT/CN2025/091506
(87) International publication number: WO 2025/246761

(57) **Abstract**

This application relates to a secondary battery and an electronic device. The secondary battery includes a housing, a pole, and a sealing assembly. The pole includes a first portion, a second portion, and a third portion. The first portion is disposed within the housing. One end of the second portion is connected to the first portion, and another end thereof extends out of the housing through a first through hole of the housing. The third portion is connected to the second portion outside the housing. The pole further includes a first recess. An opening of the first recess is located on a surface of the third portion facing away from the second portion. An outer surface of the second portion is provided with a first concave-convex structure. The sealing assembly includes a first sealing ring, a second sealing ring, and a third sealing ring, where the first sealing ring of the sealing assembly is disposed between a first wall surface of the housing and the first portion, the second sealing ring surrounds the second portion, and the third sealing ring is disposed between a second wall surface and the third portion. The secondary battery and the electronic device provided by this application may address the technical issue of poor sealing performance due to insufficient strength and high possibility of deformation of the pole of the secondary battery.

## Description

### CROSS-REFERENCE TO RELATED APPLICATIONS

This application claims priority to Chinese Patent Application No. 202410674438.1, filed on May 20, 2024 and entitled "SECONDARY BATTERY AND ELECTRONIC DEVICE", which is incorporated herein by reference in its entirety.

### TECHNICAL FIELD

This application relates to the field of battery technology, and in particular, to a secondary battery and an electronic device.

### BACKGROUND

A secondary battery, as a power source for mobile devices, is key to ensuring the normal operation of the mobile devices. Meanwhile, mobile devices such as mobile phones and notebook computers are increasingly popular, and terminal users have increasingly high requirements for high capacity and endurance of the secondary battery. Compared to a pouch secondary battery, a hard-shell secondary battery can be designed to achieve a higher capacity.

### SUMMARY

In a conventional hard-shell secondary battery, a pole is required to be provided, where the pole needs to be welded to a tab of an inner electrode assembly of the secondary battery to lead out polarity. The inventors of this application have found through research that, during welding of the pole to an inner tab, a relatively large space needs to be reserved in a housing of the secondary battery to facilitate the welding operation of the pole and the tab. However, the space in the housing is limited, making the welding operation inconvenient, thus easily leading to poor connection strength between the pole and the tab. In addition, the relatively large space reserved reduces the energy density of the secondary battery. The inventors of this application have configured the pole as a hollow pole, that is, an opening is provided on an outer surface of the pole. Outside the housing, penetration welding can be directly performed at the opening to achieve an electrical connection between the pole and the tab, eliminating the need to reserve extra space, thereby increasing the energy density of the secondary battery. Additionally, the operation is simpler and more convenient, which is conducive to improving the connection strength between the pole and the tab. However, the provision of the hollow pole reduces the strength of the pole, so that when the pole is pressed and riveted, the pole and a sealing ring are prone to deformation and misalignment, resulting in degraded sealing performance.

This application is intended to provide a secondary battery and an electronic device to address the technical issue of poor sealing performance due to insufficient strength and high possibility of deformation of a pole of the secondary battery.

According to a first aspect of this application, a secondary battery is provided, including a housing, a pole, and a sealing assembly, where the housing includes a first wall portion provided with a first through hole; the first wall portion includes a first wall surface and a second wall surface arranged opposite each other; the first wall surface faces an inner cavity of the housing; the pole includes a first portion, a second portion, and a third portion; the first portion is disposed within the housing; one end of the second portion is connected to the first portion, and another end thereof extends out of the housing through the first through hole; the third portion is connected to the second portion outside the housing; the pole further includes a first recess; an opening of the first recess is located on a surface of the third portion facing away from the second portion; an outer surface of the second portion is provided with a first concave-convex structure; and the sealing assembly includes a first sealing ring, a second sealing ring, and a third sealing ring, where the first sealing ring is disposed between the first wall surface and the first portion, the second sealing ring surrounds the second portion, and the third sealing ring is disposed between the second wall surface and the third portion.

In the above technical solution, the first recess is provided on an outer surface of the third portion, and a welding device can achieve an electrical connection between the pole and the electrode assembly at the first recess, eliminating the need to reserve space within the housing, which not only facilitates operation but also increases the energy density of the secondary battery. Additionally, since the electrical connection operation between the pole and the electrode assembly is simpler and more convenient, the improvement of the connection strength between the pole and the electrode assembly may be facilitated.

Additionally, the provision of the first concave-convex structure improves the strength of the second portion of the pole, reducing deformation of the second portion, thereby narrowing a gap between the pole and the sealing ring, and improving the sealing performance of the secondary battery. Furthermore, the provision of the first concave-convex structure may increase a connection area between the second sealing ring and the second portion, further improving the sealing performance between the second sealing ring and the pole.

Additionally, due to the provision of the first concave-convex structure, the strength of the pole is improved, and the connection area between the second sealing ring and the pole is increased, resulting in higher sealing performance. Therefore, the length of the second portion may be reduced, reducing the space occupied by the pole, further increasing the energy density of the secondary battery.

In some preferred embodiments, along a first direction, a projection of the first concave-convex structure overlaps with the first recess, and the first concave-convex structure is distributed on an outer side of the first recess, reducing the impact of the first recess on the strength of the pole.

In some preferred embodiments, along a first direction, a projection of the first wall portion overlaps with the first recess, facilitating the electrical connection between the pole and the electrode assembly.

In some preferred embodiments, the first recess has a bottom wall; and along a direction from the first wall surface to the second wall surface, the bottom wall is arranged opposite the opening; and the bottom wall of the first recess is located on a side of the first wall portion facing away from the third portion. This allows sufficient space to be reserved, facilitating the electrical connection between the pole and the electrode assembly and improving the connection strength.

In some preferred embodiments, the second sealing ring is provided with a second concave-convex structure; and the second concave-convex structure is engaged with the first concave-convex structure, fully filling a gap between the second portion and the housing, and increasing the connection area between the second sealing ring and the second portion, thereby improving the sealing performance between the pole and the housing.

In some preferred embodiments, the first concave-convex structure is an outer thread provided on the outer surface of the second portion; the second concave-convex structure is an inner thread provided on the second sealing ring; and the second sealing ring is threadedly connected to the second portion. Rotating the second sealing ring allows the second sealing ring to be threadedly connected to the second portion, making an installation operation convenient and quick.

In some preferred embodiments, the secondary battery further includes a gasket, and the gasket is disposed between the third portion and the third sealing ring. The gasket can isolate the third portion from the third sealing ring, reducing direct pressing damage to the third sealing ring by the third portion during riveting.

In some preferred embodiments, along a direction from the first wall surface to the second wall surface, a length of the first portion is L₁, and 0.1 mm ≤ Li ≤ 3 mm; and a length of the second portion is L₂, and 0.5 mm ≤ L₂ ≤ 5 mm.

A length of the third portion is L₃, and 0.1 mm ≤ L₃ ≤ 3 mm. This adaptively reduces the length of the second portion, reducing the space occupied by the pole, thereby increasing the energy density of the secondary battery.

In some preferred embodiments, along a direction from the first wall surface to the second wall surface, a length of the third portion is L₃, a length of the second portion is L₂, a depth of the first recess is D, and L₃ + L₂/2 ≤ D ≤ L₃ + L₂. This not only facilitates welding of the pole to the electrode assembly, improving the connection strength, but also allows the first portion of the pole to have relatively high strength, reducing damage or fracture at a joint between the pole and the electrode assembly.

In some preferred embodiments, the pole includes at least one of aluminum, copper, or an aluminum alloy, which has good electrical conductivity, thermal conductivity, corrosion resistance, and high processability, facilitating the riveting and sealing of the pole.

In some preferred embodiments, the first portion, the second portion, and the third portion are integrally formed. There is no connection gap between the three portions, improving the sealing performance. Additionally, the integral formation provides greater strength and allows for higher deformation resistance after riveting, narrowing an installation gap generated by deformation, thereby improving the sealing performance.

In some preferred embodiments, the first concave-convex structure includes a first protrusion, and the first protrusion has a bottom close to the first recess and a top away from the first recess; and along a direction from the first wall surface to the second wall surface, a width of the bottom is W₁, a width of the top is W₂, and W₂ ≤ W₁. The width of the top can be set larger to improve the strength of the second portion and improve the deformation resistance of the second portion. A smaller width of the top allows the second sealing ring to be embedded between two adjacent first protrusions, thereby improving the sealing performance.

In some preferred embodiments, 0.1 mm ≤ W₁ ≤ 1 mm.

In some preferred embodiments, a distance from the bottom to the top is H, and 0.1 mm ≤ H ≤ 1 mm. This facilitates the installation of the second sealing ring while allowing for sufficient engagement between the second sealing ring and the first concave-convex structure, increasing a connection area, thereby improving the sealing performance.

In some preferred embodiments, along a direction from the first recess to the first concave-convex structure, a thickness of the second portion is T, and 0.5 mm ≤ T ≤ 2 mm, which may reduce deformation or tilting of the pole. Additionally, the provision of a hollow structure facilitates the electrical connection between the pole and the electrode assembly.

According to a second aspect, this application further proposes an electronic device including the secondary battery according to any one of the foregoing embodiments of the first aspect.

Additional aspects and advantages of some embodiments of this application will be partially described, shown, or explained through the implementation of these embodiments of this application.

### BRIEF DESCRIPTION OF DRAWINGS

One or more embodiments are illustratively described by the corresponding drawings. These illustrative descriptions do not limit these embodiments. Components with the same reference numerals in the drawings are similar components, and unless otherwise stated, the dimensions in the drawings do not constitute a scale limitation.
FIG. 1 is a schematic structural diagram of a secondary battery according to some embodiments of this application;
FIG. 2 is a schematic structural diagram of a housing according to some embodiments of this application;
FIG. 3 is a schematic structural diagram of a secondary battery according to some embodiments of this application;
FIG. 4 is a partial schematic diagram of a pole riveting structure according to some embodiments of this application;
FIG. 5 is a partial exploded view of a pole riveting structure according to some embodiments of this application;
FIG. 6 is a schematic structural diagram of a secondary battery according to some embodiments of this application; and
FIG. 7 is a partial enlarged view of portion A in FIG. 5.

### Description of reference signs:

100. secondary battery;
10. housing; 11. inner cavity; 12. first wall portion; 121. first wall surface; 122. second wall surface; 13. first through hole;
20. electrode assembly; 21. tab;
30. pole; 31. first portion; 32. second portion; 321. first concave-convex structure; 3211. first protrusion; 3212. top; 3213. bottom; 33. third portion; 34. first recess; 341. bottom wall;
40. sealing assembly; 41. first sealing ring; 42. second sealing ring; 421. second concave-convex structure; 43. third sealing ring;
50. gasket;
X. first direction; Y. second direction; and Z. third direction.

### DETAILED DESCRIPTION

To make the objectives, technical solutions, and advantages of some embodiments of this application clearer, the technical solutions in these embodiments of this application will be clearly described below in conjunction with the drawings in these embodiments of this application. Apparently, the described embodiments are only some rather than all of these embodiments of this application.

Reference to "embodiment" in this application means that specific features, structures, or characteristics described with reference to the embodiment may be included in at least one embodiment of this application. The word "embodiment" appearing in various places in this specification does not necessarily refer to the same embodiment or an independent or alternative embodiment that is exclusive of other embodiments.

In the description of these embodiments of this application, the technical terms "first", "second", and the like are used only to distinguish different objects and should not be understood as indicating or implying relative importance or implying the number, specific order, or primary-secondary relationship of the indicated technical features. In the description of these embodiments of this application, "multiple" means two or more unless otherwise explicitly specified.

In the description of these embodiments of this application, the term "and/or" is only an associative relationship for describing associated objects, indicating that three relationships may be present. For example, A and/or B may indicate the following three cases: presence of only A; presence of both A and B; and presence of only B. Additionally, the character "/" in this specification generally indicates an "or" relationship between the contextually associated objects.

The technical features involved in different embodiments of this application described below can be combined with each other as long as they do not conflict with each other.

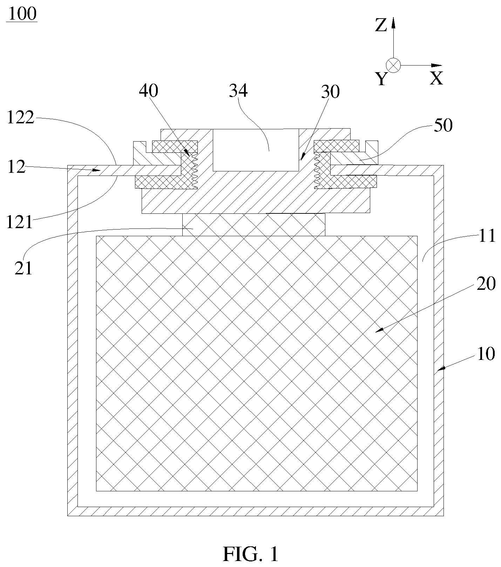

According to a first aspect of this application, a secondary battery 100 is proposed. Referring to FIG. 1, the secondary battery 100 includes a housing 10, an electrode assembly 20, a pole 30, and a sealing assembly 40. The electrode assembly 20 is disposed within the housing 10. One end of the pole 30 is electrically connected to the electrode assembly 20, and another end thereof extends out of the housing 10. The sealing assembly 40 is disposed between the pole 30 and the housing 10 and configured to insulate and separate the pole 30 from the housing 10 and seal an installation gap between the pole 30 and the housing 10.

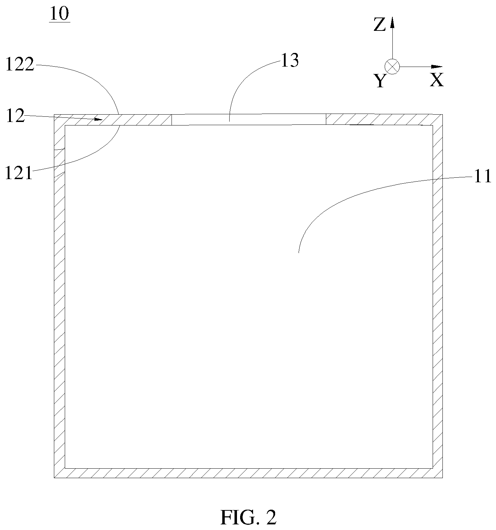

For the housing 10, referring to FIG. 1 and FIG. 2, the housing 10 encloses an inner cavity 11. The secondary battery 100 further includes an electrode assembly 20 and an electrolyte (not shown in the figures). The electrode assembly 20 and the electrolyte may both be accommodated in the inner cavity 11. The housing 10 includes a first wall portion 12. The first wall portion 12 is located at a top of the housing 10 and covers the inner cavity 11 of the housing 10. The first wall portion 12 includes a first wall surface 121 and a second wall surface 122 arranged opposite each other. The first wall surface 121 faces the inner cavity 11 of the housing 10. The second wall surface 122 faces away from the inner cavity 11 of the housing 10. The first wall portion 12 is provided with a first through hole 13. The first through hole 13 runs through the first wall surface 121 and the second wall surface 122, and the first through hole 13 is in communication with the inner cavity 11 of the housing 10. The pole 30 may be installed at the first through hole 13.

In an embodiment of this application, the secondary battery 100 may be a hard-shell secondary battery 100. The housing 10 may be a structure formed by stamping a single metal sheet. For example, the housing 10 is formed by stamping a single steel sheet. The strength of the housing 10 may be improved, and the deformation resistance of the housing 10 may be improved. In some other embodiments, the housing 10 may alternatively be made of a metal material such as stainless steel, nickel, or copper. Compared to a pouch secondary battery 100, the hard-shell secondary battery 100 in this application can be designed to achieve higher capacity, helping to meet the design requirements for high capacity and long endurance of the secondary battery 100.

For the electrode assembly 20, referring to FIG. 1, the electrode assembly 20 is disposed in the inner cavity 11 of the housing 10. The electrolyte can infiltrate the electrode assembly 20 in the inner cavity 11 of the housing 10 to achieve electrochemical reactions. The electrode assembly 20 may adopt a laminated structure. The electrode assembly 20 includes a positive electrode plate (not shown in the figure), a negative electrode plate (not shown in the figure), and a separator (not shown in the figure). Multiple positive electrode plates and multiple negative electrode plates are alternately stacked. The separator is disposed between the positive electrode plate and the negative electrode plate to insulate and separate the two.

In some other embodiments, the electrode assembly 20 may alternatively adopt a wound structure. That is, the positive electrode plate, the separator, and the negative electrode plate are stacked and wound to form a wound electrode assembly 20.

For the pole 30, the pole 30 serves as a "bridge" connected to an outer circuit and is responsible for conducting current generated inside the secondary battery 100 to the outer circuit and conducting outer current into the secondary battery 100. The pole 30 may be disposed at the first through hole 13 of the housing 10. One end of the pole is electrically connected to the electrode assembly 20 in the inner cavity 11 of the housing 10. For example, one end of the pole 30 is connected to a tab 21 of the electrode assembly 20, and another end thereof extends out of the housing 10 to be connected to the outer circuit, enabling charging and discharging of the secondary battery 100. The tab 21 may be in the shape of a sheet, a plate, a disk, or a column, as long as the tab 21 can be electrically connected to the pole 30.

In an embodiment of this application, the housing 10 is a metal housing 10. The metal housing 10 is conductive, and the metal housing 10 can serve as a positive electrode or negative electrode of the secondary battery 100. For example, when the pole 30 serves as the positive electrode of the secondary battery 100 and is electrically connected to the positive electrode plate of the electrode assembly 20, the housing 10 serves as the negative electrode. The negative electrode plate of the electrode assembly 20 is directly electrically connected to the housing 10. When the pole 30 serves as the negative electrode, the housing 10 may serve as the positive electrode. In some other embodiments, at least two poles 30 may be used. At least one pole 30 serves as the positive electrode of the secondary battery 100, and at least one pole 30 serves as the negative electrode of the secondary battery 100.

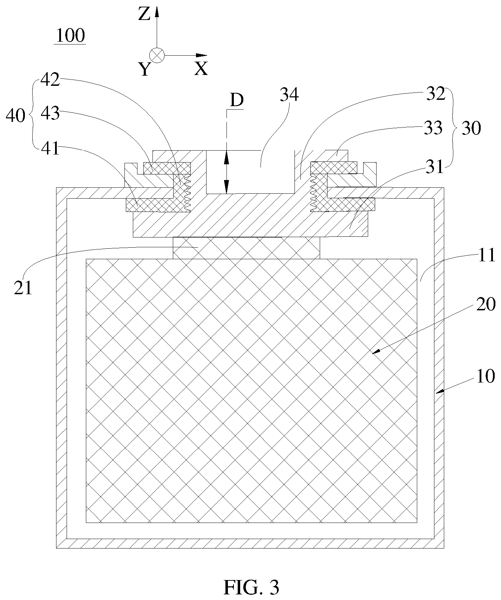

The pole 30 may adopt a riveting structure, referring to FIG. 2 and FIG. 3, the pole 30 includes a first portion 31, a second portion 32, and a third portion 33. The first portion 31 is disposed within the housing 10, and the first portion 31 is electrically connected to the electrode assembly 20. For example, the first portion 31 is electrically connected to the positive electrode plate or negative electrode plate of the electrode assembly 20 through the tab 21. One end of the second portion 32 is connected to the first portion 31, and another end thereof extends out of the housing 10 through the first through hole 13. The third portion 33 is connected to the second portion 32 outside the housing 10, and the third portion 33 is used for electrical connection to an outer circuit.

Optionally, during installation, the pole 30 is entirely columnar. The pole 30 may first be placed in the first through hole 13, then both ends of the pole 30 are riveted and flattened to form the first portion 31, the second portion 32, and the third portion 33. After riveting, along a first direction X, widths of the first portion 31 and the third portion 33 are both greater than a width of the second portion 32. The second portion 32 is sandwiched between the first portion 31 and the third portion 33, reducing the possibility of the pole 30 detaching from the housing 10.

In some embodiments, the first portion 31, the second portion 32, and the third portion 33 are integrally formed. There is no connection gap between the three portions, improving the sealing performance. Additionally, the integral formation provides greater strength and allows for higher deformation resistance after riveting, narrowing an installation gap generated by deformation, thereby improving the sealing performance.

In some embodiments, the pole 30 includes at least one of aluminum, copper, or an aluminum alloy. For example, the pole 30 is made of aluminum. The aluminum pole 30 has good electrical conductivity, thermal conductivity, corrosion resistance, ductility, and high processability, facilitating the riveting and sealing of the pole 30. During riveting, the aluminum pole 30 may be slightly compressed to fill a gap between the pole 30 and the sealing assembly 40, thereby improving the sealing performance.

For the sealing assembly 40, the sealing assembly 40 is disposed between the pole 30 and the housing 10 to seal the installation gap between the pole 30 and the housing 10, thereby sealing the inner cavity 11 of the housing 10. When the pole 30 and the housing 10 serve as the positive and negative electrodes of the secondary battery 100, respectively, the sealing assembly 40 also insulates and separates the pole 30 from the housing 10.

Referring to FIG. 3, the sealing assembly 40 includes a first sealing ring 41, a second sealing ring 42, and a third sealing ring 43. The first sealing ring 41 is disposed between the first wall surface 121 and the first portion 31 to separate the first portion 31 from the housing 10. The second sealing ring 42 surrounds the second portion 32 to separate the second portion 32 from the housing 10. The third sealing ring 43 is disposed between the second wall surface 122 and the third portion 33 to separate the third portion 33 from the housing 10.

The first sealing ring 41, the second sealing ring 42, and the third sealing ring 43 may be made of at least one of polypropylene (PP), polyethylene (PE), polystyrene (PS), polyvinyl chloride (PVC), polyethylene terephthalate (PET), polyamide (PA), or phenolic resin (PF). For example, phenolic resin is used, allowing the sealing rings to have better heat resistance and electrical insulation.

**In** some embodiments, referring to FIG. 3 to FIG. 4, the secondary battery 100 further includes a gasket 50. The gasket 50 is disposed between the third portion 33 and the third sealing ring 43. During riveting of the pole 30, the gasket 50 can isolate the third portion 33 from the third sealing ring 43, reducing direct pressing damage to the third sealing ring 43 by the third portion 33 during riveting. The gasket 50 may be a metal gasket 50. For example, the gasket 50 is made of a metal material such as stainless steel, carbon steel, or copper, and is suitable for operating conditions such as a high-pressure condition.

**In** some other embodiments, the gasket 50 may alternatively be made of rubber, plastic, or polytetrafluoroethylene. Optionally, a gasket 50 may alternatively be disposed between the first portion 31 and the first sealing ring 41 to reduce direct pressing damage to the first sealing ring 41 by the first portion 31, improving the integrity of the sealing assembly 40.

**In** some embodiments, the pole 30 may adopt a hollow structure. Referring to FIG. 3, the pole 30 further includes a first recess 34. An opening of the first recess 34 is located on a surface of the third portion 33 facing away from the second portion 32. The first recess 34 may run through the third portion 33, or the first recess 34 extends from the third portion 33 into the second portion 32, or the first recess 34 runs through both the third portion 33 and the second portion 32, or the first recess 34 runs through the third portion 33 and the second portion 32 and extends into the first portion 31.

The pole 30 of the hollow structure facilitates an electrical connection between the pole 30 and the electrode assembly 20 from outside the housing 10, with electrical connection methods including but not limited to welding, conductive adhesive bonding, or clamping. Taking welding as an example, a welding device is located outside the housing 10 and extends into the first recess 34 of the pole 30; the tab 21 of the electrode assembly 20 (the tab is electrically connected to the positive electrode plate or the negative electrode plate as an adapter for connection) abuts against a lower end of the pole 30; and then laser penetration welding is performed to fix the pole 30 to the tab by welding. This eliminates the need to reserve space inside the housing 10, which not only facilitates operation but also increases the energy density of the secondary battery 100. Additionally, since the electrical connection operation between the pole 30 and the electrode assembly 20 is simpler and more convenient, the improvement of the connection strength between the pole 30 and the electrode assembly 20 may be facilitated. The welding method is not limited to laser welding and may also include ultrasonic welding or electron beam welding.

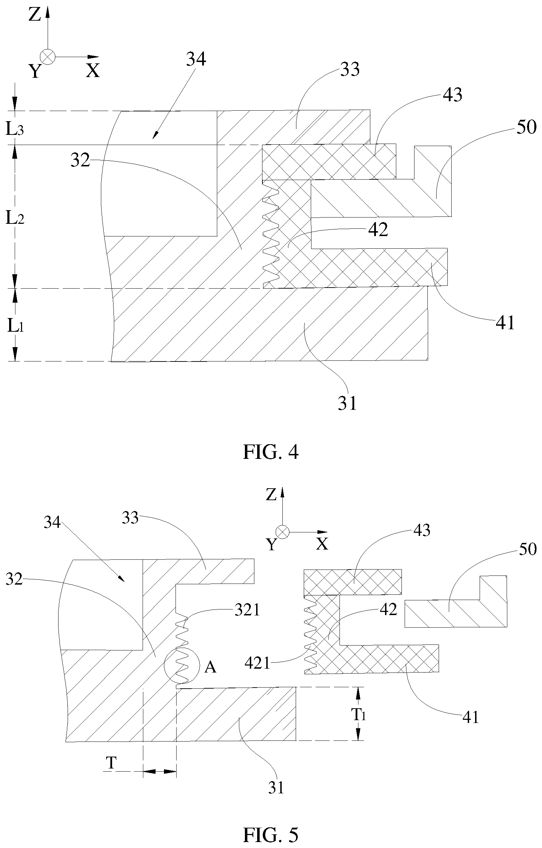

In some embodiments, further referring to FIG. 4 and FIG. 5 (FIG. 5 is a partial exploded view of a riveting structure of the pole 30, where the sealing rings are partially shown), an outer surface of the second portion 32 is provided with a first concave-convex structure 321. The provision of the first concave-convex structure 321 improves the strength of the second portion 32, reducing deformation of the second portion 32, such as riveting or collision deformation of the pole 30, thereby narrowing the installation gap caused by deformation of the pole 30, and improving the sealing performance between the second sealing ring 42 and the pole 30. Since the second portion 32 of the pole 30 is provided with the first concave-convex structure 321, the pole 30 has higher strength and higher deformation resistance, and the pole still has relatively high strength even with the hollow structure.

In some embodiments, along the first direction X, a projection of the first concave-convex structure 321 overlaps with the first recess 34, and the first concave-convex structure 321 is distributed on an outer side of the first recess 34, reducing the impact of the first recess 34 on the strength of the pole 30. It should be noted that a portion of the pole 30 provided with the first recess 34 has relatively low strength, while a portion not provided with the first recess 34 still has relatively high strength. In these embodiments, the first concave-convex structure 321 may be provided only on the outer side of the portion of the pole 30 provided with the first recess 34, reducing the impact of the first recess 34 on the strength of the pole 30, while the portion not provided with the first recess 34 (for example, a portion of the first portion 31 or the second portion 32 where the first recess 34 does not reach) does not need to be provided with the first recess 34, reducing the space occupied by the first recess 34 and reducing the impact on the energy density of the secondary battery 100.

The first direction X is perpendicular to a direction (a third direction Z) from the first wall surface 121 to the second wall surface 122. For example, the first direction X, the second direction Y, and the third direction Z are perpendicular to each other. Along a second direction Y, the projection of the first concave-convex structure 321 also overlaps with the first recess 34.

The first sealing ring 41, the second sealing ring 42, and the third sealing ring 43 may all be made of a flexible material to fully fill the installation gap between the pole 30 and the housing 10. When the second sealing ring 42 surrounds the second portion 32, the second sealing ring 42 can fill the first concave-convex structure 321 and cooperate with the first concave-convex structure 321. The provision of the first concave-convex structure 321 may increase a connection area between the second sealing ring 42 and the second portion 32, further improving the sealing performance between the second sealing ring 42 and the pole 30.

The first concave-convex structure 321 may be a protrusion protruding from the outer surface of the second portion 32 and/or a groove recessed on the outer surface of the second portion 32. The uneven arrangement increases a friction force between the second portion 32 and the second sealing ring 42 and increases the connection area between the second portion 32 and the second sealing ring 42, resulting in higher sealing performance.

In some other embodiments, a portion of the second portion 32 in contact with the second sealing ring 42 may be provided with the first concave-convex structure 321, further increasing the connection area between the second portion 32 and the second sealing ring 42. A larger contact area leads to higher sealing performance. Since the third sealing ring 43 is disposed between the second wall surface 122 and the third portion 33, the third sealing ring 43 may also be in contact with the second portion 32. A portion of the second portion 32 in contact with the third sealing ring 43 may also be provided with the first concave-convex structure 321, further improving the sealing performance and improving the strength of the pole 30.

Additionally, due to the provision of the first concave-convex structure 321, the strength of the pole 30 is significantly enhanced, and a connection area between the second sealing ring 42 and the pole 30 is increased, resulting in higher sealing performance. Therefore, a length of the second portion 32 may be reduced, reducing the space occupied by the pole 30, and further increasing the energy density of the secondary battery 100. For example, along the direction (the third direction Z) from the first wall surface 121 to the second wall surface 122, the length of the second portion 32 is L₂, and 0.5 mm ≤ L₂ ≤ 5 mm, improving the sealing performance and increasing the energy density of the secondary battery 100. A length of the first portion 31 is L₁, and 0.1 mm ≤ L₁ ≤ 3 mm; and a length of the third portion 33 is L₃, and 0.1 mm ≤ L₃ ≤ 3 mm, reducing deformation or tilting of the first portion 31 and the third portion 33, thereby improving the sealing performance.

Regarding a depth of the first recess 34, an excessively small depth of the first recess 34 makes it difficult to weld the pole 30, which may lead to an unstable electrical connection between the pole 30 and the electrode assembly 20; while an excessively large depth of the first recess 34 may make the first portion 31 excessively thin, reducing the strength of the first portion 31. Moreover, as a component electrically connected to the electrode assembly 20, a reduction in the strength of the first portion 31 may lead to damage or fracture at a joint between the pole 30 and the electrode assembly 20. In an embodiment of this application, referring to FIG. 3 and FIG. 4, the depth D of the first recess 34 is selected such that L₃ + L₂/2 ≤ D ≤ L₃ + L₂. This facilitates penetration welding of the pole 30 to the electrode assembly 20, improving the connection strength. In addition, this allows the first portion 31 of the pole 30 to have relatively high strength, reducing damage or fracture at the joint between the pole 30 and the electrode assembly 20.

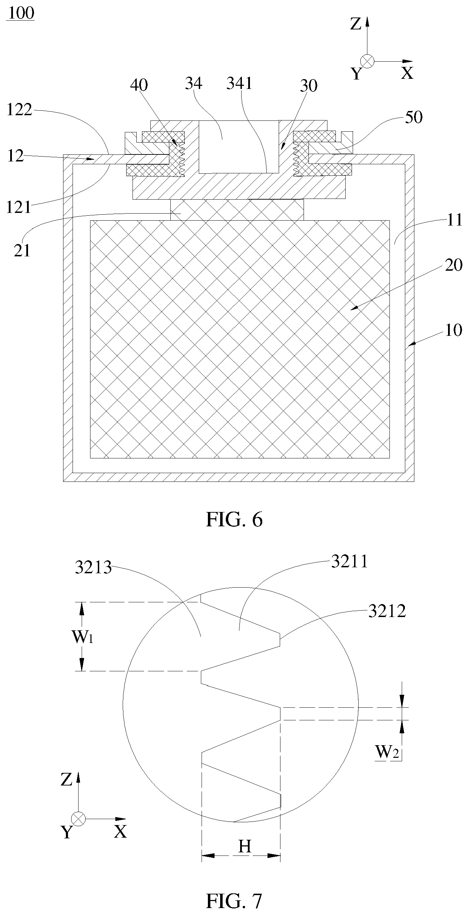

In some embodiments, referring further to FIG. 6, along the first direction X, a projection of the first wall portion 12 overlaps with the first recess 34, facilitating the electrical connection between the pole 30 and the electrode assembly 20 and allowing the pole 30 to have relatively high strength.

In some other embodiments, the first recess 34 has a bottom wall 341. Along the direction (the third direction Z) from the first wall surface 121 to the second wall surface 122, the bottom wall 341 is arranged opposite the opening. The bottom wall 341 of the first recess 34 is located on a side of the first wall portion 12 facing away from the third portion 33. Taking welding as an example, a welding device can directly act on the bottom wall 341 at the first recess 34 for penetration welding. The bottom wall 341 is disposed on the side of the first wall portion 12 facing away from the third portion 33, so that the penetration difficulty is reduced, and sufficient space in the first recess 34 is reserved, facilitating the electrical connection between the pole 30 and the electrode assembly 20, improving the connection strength, and allowing the pole 30 to have relatively high strength, thereby reducing deformation of the pole 30.

The provision of the first concave-convex structure 321 can not only improve the strength of the pole 30, reducing the riveting deformation of the pole 30, but also increase the connection area between the second sealing ring 42 and the second pole 30, improving the sealing performance. Additionally, due to the improved strength of the pole 30 and improved sealing performance, the length of the pole 30 may be reduced, reducing the space occupied by the pole 30, thereby increasing the energy density of the secondary battery 100. Furthermore, the first recess 34 may be provided on the third portion 33 of the pole 30, facilitating the electrical connection between the pole 30 and the electrode assembly 20, eliminating the need to reserve operational space for electrical connection, and further increasing the energy density of the secondary battery 100.

In some embodiments, the second sealing ring 42 is adhered between the second portion 32 and the housing 10, improving the bonding strength between the housing 10 and the second portion 32, and reducing deformation or tilting of the pole 30. Similarly, the first sealing ring 41 is adhered between the first portion 31 and the first wall surface 121 of the housing 10, and the third sealing ring 43 is adhered between the third portion 33 and the second wall surface 122 of the housing 10, further improving the bonding strength between the pole 30 and the housing 10, and reducing deformation of the pole 30, thereby improving the sealing performance.

In some embodiments, referring to FIG. 4 and FIG. 5, the second sealing ring 42 is provided with a second concave-convex structure 421. The second concave-convex structure 421 is adapted to the first concave-convex structure 321. When the second sealing ring 42 is sleeved on the second portion 32, the second concave-convex structure 421 can be directly engaged with the first concave-convex structure 321, fully filling a gap between the second portion 32 and the housing 10, and increasing the connection area between the second sealing ring 42 and the second portion 32, thereby improving the sealing performance between the pole 30 and the housing 10.

It should be noted that the engagement may mean that the first concave-convex structure 321 and the second concave-convex structure 421 fit with each other in shapes and sizes. For example, the first concave-convex structure 321 and the second concave-convex structure 421 each have a protrusion and a recess, where the protrusion of the first concave-convex structure 321 fills the recess of the second concave-convex structure 421, and the protrusion of the second concave-convex structure 421 fills the recess of the first concave-convex structure 321. This is considered as engagement. The fitting may mean that the shapes and sizes are identical or nearly identical. When the protrusion fills the recess, under a condition that the overall sealing requirements of the secondary battery 100 are met, there may be a slight gap and/or no gap between the protrusion and the recess. When there is a slight gap, the slight gap is covered by the second sealing ring 42 and the second portion 32.

In some embodiments, the first concave-convex structure 321 may be an outer thread provided on the outer surface of the second portion 32; the second concave-convex structure 421 is an inner thread provided on the second sealing ring 42; and the second sealing ring 42 can be directly threadedly connected to the second portion 32. During installation, the second sealing ring 42 can be sleeved on the outer surface of the second portion 32. Rotating the second sealing ring 42 allows the second sealing ring 42 to be threadedly connected to the second portion 32, making an installation operation convenient and quick. The pole 30 is disposed at the first through hole 13 of the first wall portion 12. The first portion 31, the second portion 32, and the third portion 33 are respectively formed by riveting. During riveting, the space between the second portion 32 and the inner wall of the first recess 34 is tightened, allowing the second sealing ring 42 to fully fill the gap between the second portion 32 and the housing 10, thereby improving the sealing performance.

The outer thread protrudes from the second portion 32, and the second sealing ring 42 may be in interference fit with the second portion 32. When the second sealing ring 42 is rotated such that the second sealing ring 42 is threadedly connected to the second portion 32, the interference fit can fully fill the gap between the second sealing ring 42 and the second portion 32, further improving the sealing performance.

In some embodiments, the first sealing ring 41 may be integrally formed with the second sealing ring 42. During installation, the second sealing ring 42 can be directly disposed at the first through hole 13 from the inner cavity 11 of the housing 10. Alternatively, the second sealing ring 42 may be integrally formed with the third sealing ring 43. During installation, the second sealing ring 42 can be directly disposed at the first through hole 13 from outside the housing 10. Alternatively, the first sealing ring 41, the second sealing ring 42, and the third sealing ring 43 are integrally formed. With the flexible properties of the sealing rings, after the housing 10 compresses the first portion 31, the first portion 31 can be directly disposed in the inner cavity 11 of the housing 10, and the second portion 32 is located at the first through hole 13.

In some other embodiments, the first sealing ring 41, the second sealing ring 42, and the third sealing ring 43 may alternatively be disposed separately. The second sealing ring 42 may first surround around the second portion 32. When riveting, the first sealing ring 41 is disposed between the first portion 31 and the first wall surface 121, and the third sealing ring 43 is disposed between the third portion 33 and the second wall surface 122.

In some embodiments, referring to FIG. 4 to FIG. 7, the first concave-convex structure 321 includes a first protrusion 3211. The provision of the first protrusion 3211 allows the second portion 32 to have higher strength. A recess is formed between two adjacent first protrusions 3211, and the third sealing ring 43 can be embedded in the recess, thereby increasing a connection area between the third sealing ring 43 and the second portion 32.

For a shape of the first protrusion 3211, when viewed along the second direction Y, the first protrusion 3211 may be configured as a triangle, a rectangle, or a trapezoid. For example, taking a trapezoid as an example, the first protrusion 3211 has a bottom 3213 close to the first recess 34 and a top 3212 away from the first recess 34. Along the direction from the first wall surface 121 to the second wall surface 122, a width of the bottom 3213 is W₁, a width of the top 3212 is W₂, and W₂ ≤ W₁. The width of the top 3212 may be set larger, helping to improve the strength of the second portion 32 and improve the deformation resistance of the second portion 32. A smaller width of the top 3212 allows the second sealing ring 42 to be embedded between two adjacent first protrusions 3211, facilitating the filling of the gap between the pole 3 and the second sealing ring 42, thereby improving the sealing performance. The first direction X, the second direction Y, and the third direction Z are perpendicular to each other.

0.1 mm ≤ W₁ ≤ 1 mm, which can not only improve the strength of the second portion 32 but also facilitate the embedding of the second sealing ring 42 into the first concave-convex structure 321, thereby improving the sealing performance.

For a height of the first protrusion 3211, if the height of the first protrusion 3211 is excessively large, the second sealing ring 42 is difficultly installed on the second portion 32. If the height of the first protrusion 3211 is excessively small, the connection area is relatively small, which is not conducive to improving the sealing performance. In an embodiment of this application, referring to FIG. 7, along the first direction X, a distance from the bottom 3213 to the top 3212 is H, and 0.1 mm ≤ H ≤ 1 mm. This facilitates the installation of the second sealing ring 42 while allowing for sufficient engagement between the second sealing ring 42 and the first concave-convex structure 321, increasing a connection area, thereby improving the sealing performance.

The second portion 32 is disposed at the first through hole 13, and the second portion 32 serves as a connector between the inner first portion 31 and the outer third portion 33. The strength of the second portion 32 also affects the deformation resistance of the pole 30. In these embodiments of this application, the pole 30 is a pole 30 with a hollow structure. The provision of the first recess 34 can implement the electrical connection between the pole 30 and the electrode assembly 20 from outside the housing 10.

In an embodiment of this application, referring to FIG. 5, along a direction (the first direction X) from the first recess 34 to the first concave-convex structure 321, a thickness of the second portion 32 is T, and 0.5 mm ≤ T ≤ 2 mm. Combined with the first concave-convex structure 321, the pole 30 with the hollow structure may also have relatively high strength, which is sufficient to reduce deformation or tilting of the pole 30. In addition, the pole 3 with the hollow structure facilitates the electrical connection between the pole 30 and the electrode assembly 20. It should be noted that the thickness of the second portion 32 does not include the first concave-convex structure 321.

According to a second aspect of this application, an electronic device is further proposed, including the secondary battery 100 according to any one of these embodiments of the first aspect. The electronic device of these embodiments of this application is not particularly limited and may be any electronic device known in the prior art. For example, the electronic device includes but is not limited to a Bluetooth earphone, a mobile phone, a tablet, a notebook computer, an electric toy, an electric tool, an electric bicycle, an electric vehicle, a ship, and a spacecraft. The electric toy may include a fixed or mobile electric toy, such as a game console, an electric toy car, an electric toy ship, and an electric toy airplane. The spacecraft may include an airplane, a rocket, a space shuttle, and a spaceship.

### Example 1: Preparation of lithium-ion battery

### <Preparation of positive electrode plate>:

A positive electrode active material lithium iron phosphate, a positive electrode conductive agent acetylene black, and a positive electrode binder polyvinylidene fluoride (PVDF, with a weight-average molecular weight of 5×10⁵) were mixed at a mass ratio of 94:3:3; N-methylpyrrolidone (NMP) was added as a solvent. The resulting mixture was stirred in a vacuum mixer to form a uniform positive electrode slurry with a solid content of 75wt%. An aluminum foil with a thickness of 8 µm was selected as a positive electrode current collector, and the aluminum foil was cut to form a positive electrode inner tab. The positive electrode slurry was evenly applied on one surface of the positive electrode current collector aluminum foil, followed by drying at 110°C, to obtain a positive electrode plate with one surface coated with a positive electrode active material layer (with a thickness of 80 µm). Then, the above steps were repeated on another surface of the aluminum foil to obtain a positive electrode plate with double surfaces coated with the positive electrode active material layer.

### <Preparation of negative electrode plate>

A negative electrode active material graphite powder, a conductive agent conductive carbon black (Super P), and a binder styrene-butadiene rubber (SBR) were mixed at a weight ratio of 97.5:1:1.5. Then, deionized water was added as a solvent. The resulting solution was prepared into a negative electrode slurry with a solid content of 50wt%, and the negative electrode slurry was stirred well. A copper foil with a thickness of 5 µm was selected as a negative electrode current collector, and the copper foil was cut to form a negative electrode inner tab. The negative electrode slurry was evenly applied on one surface of the negative electrode current collector copper foil, followed by drying at 90°C, to obtain a negative electrode plate with one surface coated with a negative electrode active material with a weight of 9.1 mg/cm². After the above steps were completed, single-sided coating of the negative electrode plate was completed. The above steps were repeated on another surface of the negative electrode plate to obtain a negative electrode plate with double surfaces coated with a negative electrode active material layer.

### <Preparation of separator>

A polyethylene (PE) porous film with a thickness of 8 µm was used as a separator.

### <Preparation of electrolyte>

In a dry argon atmosphere, ethylene carbonate, ethyl methyl carbonate, and diethyl carbonate were mixed at a mass ratio of 30:50:20 to obtain an organic solvent, then a lithium salt lithium hexafluorophosphate was added to an organic solvent, dissolved, and mixed well to obtain an electrolyte with a lithium salt concentration of 1.15 mol/L.

### <Preparation of lithium-ion battery>

The prepared separator, positive electrode plate, separator, and negative electrode plate were stacked in sequence and then wound to obtain an electrode assembly; and the electrode assembly was hot-pressed with a pressure of 5 MPa, a temperature of 65°C, and a pressure holding time of 10s.

The electrode assembly was placed in a steel housing provided with a first through hole. A pole with a hollow structure was used, and the pole was placed in the first through hole of the housing. One end of the pole extended beyond the first through hole and was located inside the housing, and another end thereof extended beyond the first through hole and was located outside the housing. A portion of the pole located in the first through hole was provided with an uneven first concave-convex structure, and a portion located outside the housing was provided with a first recess.

A sealing ring was sleeved on the pole, and the sealing ring extended from inside the housing to outside the housing. A riveting device was used to rivet and flatten both ends of the pole, so that the pole forms a first portion, a second portion, and a third portion, where a length of the second portion was 5 mm (referred to a length along a third direction Z in FIG. 4), a length of the first portion was 0.5 mm, and a length of the third portion was 0.8 mm. A sealing ring between the first portion and the housing was a first sealing ring, a sealing ring between the second portion and the housing was a second sealing ring, and a sealing ring between the third portion and the housing was a third sealing ring. At the first recess, the pole was welded to the positive electrode inner tab through laser penetration welding, and the housing was directly connected to the negative electrode inner tab. After dehydration at 80°C, an electrolyte was injected and sealed.

Comparative Example 1 differed from Example 1 in that the pole was not provided with the first recess or the first concave-convex structure.

Relevant parameters of Comparative Examples 2 and 3 and Examples 2 to 8 were shown in Table 1 below.

Drop test method: A lithium-ion battery was pre-treated at 25°C and left standing in a room temperature environment for 60 min. A voltage of the lithium-ion battery was tested before the drop test. The lithium-ion battery was placed in a fixture, and a drop device was used to sequentially drop the fixture from a position at a height of 1.5 m above the ground, where the drops were performed in a sequence of the head, the tail, the head right corner, the tail right corner, the head left corner, and the tail left corner (at an angle of 45±15°); and this cycle was repeated 6 times. After the drop test, the battery was left standing at room temperature for 24 h, and the appearance of the top pole of the lithium-ion battery was inspected and photographed before and after the test. The pass criterion for the test was as follows: no smoke or no electrolyte leakage occurred at the top pole; and after the lithium-ion battery was disassembled, a joint between the pole and the positive electrode inner tab was not damaged or fractured. 20 lithium-ion batteries were tested, and X batteries failed to pass the test. This indicated that the test failure rate was X/20. The test results were shown in Table 1 below.

**Table 1**

| | Whether first recess is provided | Whether first concave-convex structure is provided | Length of second portion (mm) | Test failure rate |
|---|---|---|---|---|
| Comparative Example 1 | No | No | 5 | 15/20 |
| Comparative Example 2 | Yes | No | 5 | 13/20 |
| Comparative Example 3 | No | Yes | 5 | 10/20 |
| Example 1 | Yes | Yes | 5 | 0/20 |
| Example 2 | Yes | Yes | 4 | 1/20 |
| Example 3 | Yes | Yes | 3 | 3/20 |
| Example 4 | Yes | Yes | 2 | 4/20 |
| Example 5 | Yes | Yes | 1 | 4/20 |
| Example 6 | Yes | Yes | 0.5 | 5/20 |
| Example 7 | Yes | Yes | 0.4 | *7*/*20* |
| Example 8 | Yes | Yes | 5.5 | 0/20 |

Based on Table 1 above, from combination of Examples 1 to 8 and Comparative Examples 1 to 3, it can be seen that when the pole is provided with both the first concave-convex structure and the first recess, the test failure rate is significantly reduced. This is because the provision of the first concave-convex structure may increase the connection area between the second sealing ring and the second portion, improving the sealing performance between the second sealing ring and the pole, thereby reducing the risk of electrolyte leakage in the lithium-ion battery. Additionally, the provision of the first recess facilitates the electrical connection between the pole and the positive electrode inner tab from outside the housing, making it easier to increase the connection area between the pole and the positive electrode inner tab, thereby improving the connection strength and reducing the risk of damage or fracture at the joint between the pole and the positive electrode inner tab. Furthermore, the provision of the first concave-convex structure allows the pole to have higher strength, reducing deformation or tilting of the pole during collision of the lithium-ion battery, thereby reducing gaps caused by deformation or tilting, and reducing the risk of electrolyte leakage in the battery.

In Comparative Example 1, the absence of the first recess makes it inconvenient to electrically connect the pole to the positive electrode inner tab, making it difficult to increase the connection area between the pole and the positive electrode inner tab, and resulting in low connection strength. Additionally, a relatively large space needs to be reserved for the electrical connection operation inside the housing of the lithium-ion battery. The reserved space may be used as a space for movement of the electrode assembly, leading to damage or fracture at the joint between the pole and the positive electrode inner tab during the drop test, and the reserved space affects the energy density of the lithium-ion battery. In Comparative Example 1, the first concave-convex structure is also not provided. The pole has relatively low strength and is prone to deformation, and the deformation of the pole during collision increases the installation gap between the pole and the housing, leading to a relatively high collision failure rate. Additionally, the connection area between the pole and the sealing ring is relatively small, resulting in poor sealing performance, and increasing the risk of electrolyte leakage or smoke during the drop test.

In Comparative Example 2, only the first recess is provided, but the first concave-convex structure is not provided. The pole has relatively low strength and is prone to deformation, and the deformation of the pole during collision increases the installation gap between the pole and the housing, leading to a relatively high collision failure rate. Additionally, the connection area between the pole and the sealing ring is relatively small, resulting in poor sealing performance.

In Comparative Example 3, the first concave-convex structure is provided, but the first recess is not provided, making it difficult to electrically connect the pole to the positive electrode inner tab. A space needs to be reserved inside the housing for the electrical connection between the pole and the positive electrode inner tab. The electrical connection operation is inconvenient, which not only affects the energy density of the lithium-ion battery but also reduces the connection area, leading to damage or fracture at the joint between the pole and the positive electrode inner tab.

In the above examples, due to the provision of the first concave-convex structure, the strength of the pole is improved, and the connection area between the second sealing ring and the pole is increased, resulting in higher sealing performance, allowing for an adaptive reduction in the length of the second portion, and reducing the space occupied by the pole, thereby increasing the energy density of the lithium-ion battery. Additionally, the provision of the first recess eliminates the need to reserve extra space for the electrical connection between the pole and the positive electrode inner tab, further increasing the energy density of the lithium-ion battery.

From combination of Examples 1 to 8, it can be seen that Examples 1 to 6 and Example 8 have a lower drop failure risk than Example 7. This may be because in Example 7, the length of the pole is excessively short, potentially reducing the connection area and causing a less significant effect on improving the sealing performance. Additionally, in Example 8, the drop failure risk is consistent with Example 1, but in Example 1, the pole is shorter and occupies less space, and the lithium-ion battery in Example 1 may have a higher energy density. Therefore, in this application, the length L₂ of the second portion of the pole may be selected such that 0.5 mm ≤ L₂ ≤ 5 mm.

The above descriptions are only embodiments of this application and do not limit the patent scope of this application. Any equivalent structure or equivalent process transformation made using the contents of the specification and drawings of this application, or directly or indirectly applied in other related technical fields, all fall within the patent protection scope of this application.

## Claims

1. A secondary battery, comprising:
a housing comprising a first wall portion provided with a first through hole, wherein the first wall portion comprises a first wall surface and a second wall surface arranged opposite each other, and the first wall surface faces an inner cavity of the housing;
a pole comprising a first portion, a second portion, and a third portion, wherein the first portion is disposed within the housing; one end of the second portion is connected to the first portion, and another end thereof extends out of the housing through the first through hole; the third portion is connected to the second portion outside the housing; the pole further comprises a first recess; an opening of the first recess is located on a surface of the third portion facing away from the second portion; and an outer surface of the second portion is provided with a first concave-convex structure; and
a sealing assembly comprising a first sealing ring, a second sealing ring, and a third sealing ring, wherein the first sealing ring is disposed between the first wall surface and the first portion, the second sealing ring surrounds the second portion, and the third sealing ring is disposed between the second wall surface and the third portion.

2. The secondary battery according to claim 1, wherein along a first direction, a projection of the first concave-convex structure overlaps with the first recess, wherein the first direction is perpendicular to a direction from the first wall surface to the second wall surface.

3. The secondary battery according to claim 1, wherein along a first direction, a projection of the first wall portion overlaps with the first recess.

4. The secondary battery according to claim 3, wherein the first recess has a bottom wall; along a direction from the first wall surface to the second wall surface, the bottom wall is arranged opposite the opening; and the bottom wall of the first recess is located on a side of the first wall portion facing away from the third portion.

5. The secondary battery according to claim 1, wherein the second sealing ring is provided with a second concave-convex structure; and the second concave-convex structure is engaged with the first concave-convex structure.

6. The secondary battery according to claim 1, wherein the first concave-convex structure is an outer thread provided on the outer surface of the second portion; the second concave-convex structure is an inner thread provided on the second sealing ring; and the second sealing ring is threadedly connected to the second portion.

7. The secondary battery according to claim 1, wherein the secondary battery further comprises a gasket, and the gasket is disposed between the third portion and the third sealing ring.

8. The secondary battery according to claim 1, wherein along a direction from the first wall surface to the second wall surface, a length of the second portion is L₂, and 0.5 mm ≤ L₂ ≤ 5 mm.

9. The secondary battery according to any one of claims 1 to 8, wherein along a direction from the first wall surface to the second wall surface,
a length of the first portion is L₁, and 0.1 mm ≤ L₁ ≤ 3 mm; and
a length of the third portion is L₃, and 0.1 mm ≤ L₃ ≤ 3 mm.

10. The secondary battery according to claim 1, wherein along a direction from the first wall surface to the second wall surface, a length of the third portion is L₃, a length of the second portion is L₂, a depth of the first recess is D, and L₃ + L₂/2 ≤ D ≤ L₃ + L₂.

11. The secondary battery according to claim 1, wherein the pole comprises at least one of aluminum, copper, or an aluminum alloy.

12. The secondary battery according to claim 1, wherein the first portion, the second portion, and the third portion are integrally formed.

13. The secondary battery according to claim 1, wherein the first concave-convex structure comprises a first protrusion, and the first protrusion has a bottom close to the first recess and a top away from the first recess; and
along a direction from the first wall surface to the second wall surface, a width of the bottom is W₁, a width of the top is W₂, and W₂ ≤ W₁.

14. The secondary battery according to claim 13, wherein 0.1 mm ≤ W₁ ≤ 1 mm.

15. The secondary battery according to claim 13, wherein a distance from the bottom to the top is H, and 0.1 mm ≤ H ≤ 1 mm.

16. The secondary battery according to claim 1, wherein along a direction from the first recess to the first concave-convex structure, a thickness of the second portion is T, and 0.5 mm ≤ T ≤ 2 mm.

17. An electronic device, comprising the secondary battery according to any one of claims 1 to 16.
